# EUROPÄISCHE PATENTANMELDUNG

(11) **EP 2 165 896 A1**
(43) Veröffentlichungstag der Anmeldung: **24.03.2010**
(21) Anmeldenummer: 09166678.4
(22) Anmeldetag: 29.07.2009
(51) Int. Cl.: B60T 8/1755

(54) **Kraftfahrzeug mit Navigations- und ESP-System**

(30) Priorität: 23.09.2008 DE 102008042284
(71) Anmelder: Robert Bosch GmbH, 70442 Stuttgart (DE)
(72) Erfinder: Rychlak, Stefan, 31241 Ilsede (DE)

(57) **Zusammenfassung**

Ein Kraftfahrzeug (1) ist mit einem Navigationssystem (2) und mit einem ESP-System (3) ausgestattet. Zur Erhöhung der Verkehrssicherheit des Kraftfahrzeuges (1) sind bei einer Ansteuerung des ESP-Systems (3) Daten des Navigationssystems (2) berücksichtigbar. Weiterhin wird ein entsprechendes Verfahren zur Ansteuerung des ESP-Systems (3) angegeben.

## Beschreibung

### Technisches Gebiet

Die Erfindung betrifft ein Kraftfahrzeug mit einem Navigationssystem und mit einem ESP-System sowie ein Verfahren zur Ansteuerung eines ESP-Systems.

### Stand der Technik

Kraftfahrzeuge sind mit einem Navigationssystem oder einem Navigationsgerät ausgestattet. Derartige Navigationssysteme umfassen im Wesentlichen eine Positionsbestimmungseinrichtung, die mit Hilfe von Signalen, die von GPS-Satelliten oder zukünftig den Galileo-Satelliten ausgesandt werden, ihre Position im Raum in an sich bekannter Weise bestimmen. Weiterhin ist eine Zielführungseinrichtung vorhanden, die ausgehend von dieser Position eine Route zu einem vom Nutzer des Navigationssystems vorgegebenen Zielpunkt errechnet und entsprechende Richtungshinweise optisch und/oder akustisch ausgibt. Hierfür wird für eine Zielführung eines Kraftfahrzeugs auf Informationen bezüglich des Strecken- und Wegenetzes des zu befahrenden Gebietes zurückgegriffen, die beispielsweise auf einer austauschbaren CD-ROM oder DVD hinterlegt sind. Bei der Ermittlung einer Fahrtroute können vom Nutzer auch verschiedene Streckenarten wie Mautstrecken, Autobahnen oder dergleichen ausgeschlossen werden. Weiterhin kann eine schnellste und/oder kürzeste Fahrtroute zugrunde gelegt werden.

Weiterhin ist es bekannt, dass Kraftfahrzeuge mit einem ESP-System (elektronisches Stabilitätsprogramm) ausgestattet sind. Derartige Fahrassistenz-Systeme greifen u.a. bei schnellen Kurvenfahrten, Lastwechseln oder starken Bremsvorgängen in die Führung des Fahrzeuges beispielsweise durch gezieltes Bremsen an einem Rad ein. Mit derartigen Fahrhilfen oder Sicherheitssystemen wird die aktive und passive Verkehrssicherheit erhöht, da zumindest in potentiell verkehrsgefährdenden Situationen ein Ausbrechen oder Schleudern des Kraftfahrzeugs vermieden werden kann. Hierzu steht ein ESP-System mit verschiedenen Sensoren im Kraftfahrzeug wie beispielsweise Beschleunigungs- und Neigungssensoren über an sich bekannte Busverbindungen in Verbindung, um alle für die Stabilität des Kraftfahrzeugs relevanten Einflussgrößen erfassen zu können.

Als nachteilig hierbei ist es anzusehen, dass bei bekannten Kraftfahrzeugen zwar eine Zielführung mit einem üblicherweise serienmäßig eingebauten Navigationssystem möglich ist, wobei ein zuverlässiges Fahrverhalten von einem ebenfalls bereits vorhandenen ESP-System oder dergleichen überwacht und aufrechterhalten werden kann. Allerdings ist es nicht ausgeschlossen, dass durch eine plötzliche Kurvenfahrt oder auf einer steilen Gefällestrecke dennoch eine potentiell verkehrsgefährdende Situation entstehen kann.

Ausgehend von diesem Stand der Technik liegt der Erfindung die Aufgabe zugrunde, ein Kraftfahrzeug der eingangs genannten Art zu schaffen, dessen Verkehrssicherheit wesentlich erhöht ist. Weiterhin soll ein entsprechendes Verfahren zur Ansteuerung eines ESP-Systems geschaffen werden.

Diese Aufgaben werden durch die in den Ansprüchen 1 und 3 angegebenen Merkmale gelöst.

### BESCHREIBUNG DER ERFINDUNG

Der Kerngedanke der Erfindung besteht darin, dass in einem Kraftfahrzeug an sich bekannte Navigationssysteme und ESP-Systeme vorhanden sind. Nunmehr werden allerdings Daten des Navigationssystems zur Ansteuerung des ESP-Systems verwendet. Aufgrund beispielsweise der Informationen über das Strecken- und Wegenetz sowie der momentan erfassten Position kann vom Navigationssystem darauf geschlossen werden, dass beispielsweise mehrere enge Kurven durchfahren werden müssen. Diese Informationen, vorzugsweise gemeinsam mit einer Information bezüglich der momentanen Fahrzeuggeschwindigkeit, wird nunmehr an das ESP-System weitergeleitet, so dass dieses vorzugsweise schon vor Beginn beispielsweise der Kurvenfahrt darauf reagieren kann, um die kurvenäußeren Aufhängungen und Federungen der Räder entsprechend anzusteuern, so dass keine zu starke Neigung der Karosserie auftritt. Auch kann bereits vorausschauend ein Bremsvorgang eingeleitet werden, falls aus dem bekannten Streckenverlauf sowie der aktuellen Fahrzeuggeschwindigkeit darauf geschlossen werden müsste, dass eine Kurvendurchfahrt bei dieser Fahrzeuggeschwindigkeit nicht möglich ist. In gleicher Weise kann vom Navigationssystem eine Information dahingehend an das ESP-System weitergeleitet werden, dass eine längere Steigungs- oder Gefällestrecke befahren wird, so dass beispielsweise beim Bergabfahren bereits vorausschauend die Bremskraft entsprechend verteilt wird, um jederzeit sicher ein Bremsmanöver ohne blockierende Räder durchführen zu können. Es versteht sich, dass hierbei auch ein Gesamtgewicht des Kraftfahrzeugs sowie eventuell vorhandene Zuladungen berücksichtigt werden können, die üblicherweise sensorisch erfassbar sind.

Es ist für den Fachmann ersichtlich, dass eine entsprechende Datenübertragung zwischen Navigationssystem und ESP-System unter anderem über im Kraftfahrzeug vorhandene Bussysteme erfolgen kann oder drahtlos beispielsweise nach dem Blutooth-Standard. Im Rahmen der Erfindung ist unter dem Begriff ESP-System eine beliebige Art eines Fahrassistenzsystems in einem Kraftfahrzeug zu verstehen, das auf das tatsächliche Fahrverhalten Einfluss nimmt unter anderem durch unmittelbare Brems- oder Beschleunigungsvorgänge oder durch Veränderungen der Dämpfung und Federung.

Der Vorteil der Erfindung besteht darin, dass lediglich bereits im Kraftfahrzeug vorhandene Komponenten in geringfügiger Weise hard- und/oder softwaremäßig modifizert werden müssen, um die im Navigationssystem vorhandenen Daten beispielsweise über einen Streckenverlauf dem ESP-System zur Verfügung zu stellen, so dass dieses vorausschauend in einen Fahrbetrieb eingreifen kann. Somit ist der Aufwand bei der Herstellung des Kraftfahrzeugs praktisch nicht erhöht, gleichzeitig wird jedoch eine erhebliche Steigerung der Verkehrssicherheit erreicht. Prinzipiell kann eine solche Weiterleitung von Daten durch den Nutzer auch unterbunden werden, wenn dies gewünscht ist.

Vorteilhafte Ausgestaltungen der Erfindung sind in den Unteransprüchen gekennzeichnet.

Weiterhin ist vorgeschlagen, dass auch Daten oder Signale weiterer Sensoren bei der Ansteuerung des ESP-Systems berücksichtigbar sind. Die sind insbesondere Daten eines Bilderfassungssystems wie beispielsweise ein Überwachungssystem oder ein Parkassistenzsystem. Mit derartigen Systemen kann die Umgebung um das Kraftfahrzeug herum überwacht werden und bei geeigneter Auslegung kann beispielsweise eine Kurveneinfahrt oder eine Kurvenausfahrt erfasst und entsprechende Informationen an das ESP-System weitergeleitet werden, dass also beispielsweise nach der Kurveneinfahrt eine Kurve durchfahren werden wird.

Ebenso können Signale von Infrarot- und/oder Radarsensoren berücksichtigt werden, um Informationen über eine Fahrzeugumgebung zu erfassen und auswerten zu können.

### KURZBESCHREIBUNG DER ZEICHNUNG

Eine Ausführungsform der Erfindung wird nachstehend anhand der Zeichnungen näher erläutert. Es zeigt:

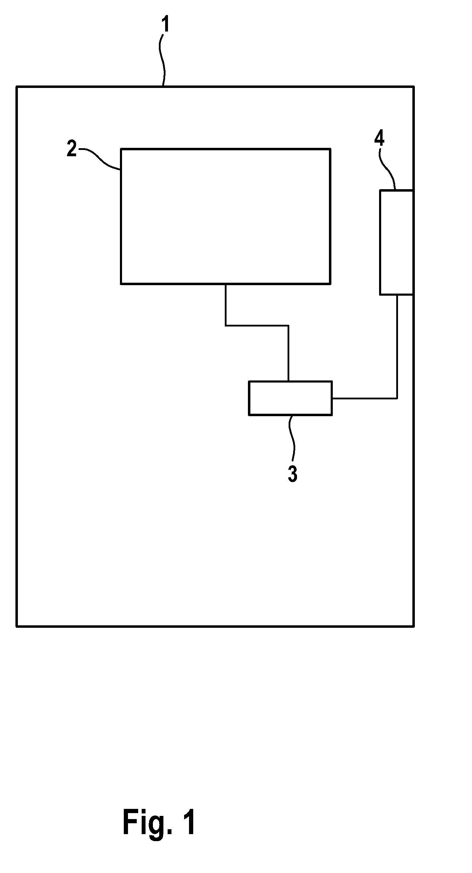

- Fig. 1:: ein Kraftfahrzeug in schematischer Darstellung.

### Bester Weg zur Ausführung der Erfindung

Aus der schematischen Darstellung in Figur 1 ist ein Kraftfahrzeug 1 ersichtlich, das mit einem an sich bekannten Navigationssystem 2 ausgestattet ist. Das Navigationssystem 2 umfasst dabei eine Positionsbestimmungseinrichtung, die beispielsweise über GPS-Signale die tatsächliche Position des Navigationssystems 2 bzw. des damit ausgestatteten Kraftfahrzeugs 1 im Raum bestimmt. Weiterhin wird mit einer Zielführungseinrichtung eine mögliche Fahrtrichtung zu einem vom Nutzer vorgegebenen Zielpunkt ermittelt. Hierzu wird auf Daten eines Datenspeichers wie eine CD-ROM oder eine DVD zurückgegriffen. Die entsprechenden Zielführungsanweisungen werden über eine Ausgabeeinrichtung optisch und/oder akustisch ausgegeben, so dass die vorausberechnete Fahrtroute vom Nutzer des Kraftfahrzeuges 1 befahren werden kann.

Weiterhin ist im Kraftfahrzeug 1 ein ESP-System 3 vorhanden, das sensorisch Beschleunigungswerte, Neigungswerte der Karosserie des Kraftfahrzeuges 1 und dergleichen erfasst und dementsprechend auf ein Rad 4 des Kraftfahrzeuges einwirkt, um unter anderem durch gezielte Bremseingriffe an diesem Rad 4 ein Schleudern oder Ausbrechen des Kraftfahrzeugs zu verhindern. In gleicher Weise kann eine Aufhängung oder Federung des Rades 4 beeinflusst werden.

Erfindungsgemäß werden nunmehr die im Navigationssystem 2 vorhandenen Daten über ein Bussystem oder dergleichen an das ESP-System 3 weitergeleitet, wie durch die Verbindungslinien angedeutet, so dass die Daten des Navigationssystems 2 vom ESP-System 3 berücksichtigt werden können. Beispielsweise können vom Navigationssystem 2 Informationen über eine unmittelbar bevorstehende Kurvenfahrt an das ESP-System 3 weitergeleitet werden, so dass dieses rechtzeitig vorher entsprechende Eingriffe tätigen kann, um ein Ausbrechen während der Kurvenfahrt zu vermeiden. Ebenso kann bei einer langen Gefällestrecke vom ESP-System 3 rechtzeitig eingegriffen werden, um z.B. die Geschwindigkeit des Kraftfahrzeugs 1 zu verringern.

Es versteht sich, dass auch weitere Sensorsignale vom ESP-System 3 berücksichtigbar sind, wie beispielsweise die Signale eines Bilderfassungssystems, von Infrarot- oder Radarsensoren zur Erfassung einer Kurvenein- oder -ausfahrt.

## Patentansprüche

1. Kraftfahrzeug (1) mit einem Navigationssystem (2) und mit einem ESP-System (3), **dadurch gekennzeichnet, dass** bei einer Ansteuerung des ESP-Systems (3) Daten des Navigationssystems (2) berücksichtigbar sind.

2. Kraftfahrzeug (1) nach Anspruch 1, **dadurch gekennzeichnet, dass** bei der Ansteuerung des ESP-Systems (3) Signale weiterer Sensoren berücksichtigbar sind, insbesondere von Bilderfassungssystemen.

3. Verfahren zur Ansteuerung eines ESP - Systems (3) in einem Kraftfahrzeug (1), das mit einem Navigationssystem (2) ausgestattet ist, **dadurch gekennzeichnet, dass** bei der Ansteuerung des ESP-Systems (3) Daten des Navigationssystems (2) berücksichtigt werden.

4. Verfahren nach Anspruch 3, **dadurch gekennzeichnet, dass** bei der Ansteuerung des ESP-Systems (3) Signale weiterer Sensoren berücksichtigt werden, insbesondere von Bilderfassungssystemen.

5. Verfahren nach Anspruch 3, **dadurch gekennzeichnet, dass** bei der Ansteuerung des ESP-Systems (3) Signale von Infrarot- oder Radarsensoren berücksichtigt werden.
